# EUROPÄISCHE PATENTANMELDUNG

(11) **EP 3 154 171 A1**
(43) Veröffentlichungstag der Anmeldung: **12.04.2017**
(21) Anmeldenummer: 16191476.7
(22) Anmeldetag: 29.09.2016
(51) Int. Cl.: H02K 9/197, H02K 3/24, H02K 9/22, H02K 1/14

(54) **STATOR FÜR EINE ELEKTRISCHE MASCHINE**

(30) Priorität: 07.10.2015 DE 102015013018
(71) Anmelder: AUDI AG, 85045 Ingolstadt (DE); Karlsruher Institut für Technologie, 76131 Karlsruhe (DE)
(72) Erfinder: Straßer, Roman, 85080 Gaimersheim (DE); Juris, Peter, 85057 Ingolstadt (DE); Heidler, Bastian, 85402 Kranzberg (DE)

(57) **Zusammenfassung**

Stator für eine elektrische Maschine (1), umfassend
• einen ringförmigen Statorkörper (9) mit mehreren radial von einer ringförmigen Grundform abstehenden Statorzähnen (10), die in Umfangsrichtung zwischen jeweils zwei der Statorzähne (10) eine Aufnahme für Wicklungen (12) jeweils wenigstens einer Spule (13) ausbilden, und
• mehrere Spulen (13), deren Wicklungen (12) jeweils wenigstens einen der Statorzähne (19) umlaufen,
dadurch gekennzeichnet,
dass der Stator (2) ein Statorgehäuse (6) aufweist, das für sich genommen oder gemeinsam mit dem Statorkörper (9) ein von Kühlmittel durchströmbares Kühlvolumen (17) abgesehen von wenigstens einem Kühlmittelzufluss (7) und wenigstens einem Kühlmittelabfluss (8) vollständig umschließt, wobei das Kühlvolumen (17) zumindest die Spulen (13) einschließt, wobei das Statorgehäuse (6, 24) vollständig oder in mehreren Feldführungsbereichen (22, 26) paramagnetisch und/oder ferromagnetisch ist.

## Beschreibung

Die Erfindung betrifft einen Stator für eine elektrische Maschine, umfassend einen ringförmigen Statorkörper mit mehreren radial von einer ringförmigen Grundform abstehenden Statorzähnen, die in Umfangsrichtung zwischen jeweils zwei der Statorzähne eine Aufnahme für Wicklungen jeweils wenigstens einer Spule ausbilden, und mehrere Spulen, deren Wicklungen jeweils wenigstens einen der Statorzähne umlaufen. Daneben betrifft die Erfindung eine elektrische Maschine, ein Kraftfahrzeug sowie ein Verfahren zur Herstellung eines Stators für eine elektrische Maschine.

Aufgrund der Nutzung von elektrischen Antrieben in Kraftfahrzeugen ergeben sich zunehmend höhere Anforderungen an elektrische Maschinen. Motoren in Kraftfahrzeugen sollen möglichst klein und leicht sein, dabei jedoch hohe Drehmomente und Leistungen bereitstellen. Die daraus resultierende Erhöhung der Stromdichten in den Stator- bzw. Rotorwicklungen führt zu thermischen Verlusten und somit zu Abwärme im Bereich dieser Wicklungen. Bei hochausgenutzten Maschinen ist die Leistungsfähigkeit daher zunehmend durch die thermische Belastbarkeit der Maschine begrenzt.

Die Leistungsfähigkeit einer elektrischen Maschine kann durch eine aktive Kühlung mit gasförmigen oder flüssigen Medien verbessert werden. Es ist bekannt, an der dem Rotor abgewandten Seite des Stators eine Wassermantelkühlung vorzusehen, bei der benachbart zum Stator ein wasserdurchströmter Hohlraum vorgesehen ist. Daneben ist es bekannt, den Bereich zwischen den Statorwicklungen mit einem Kühlmittel zu fluten. Dies wird dadurch ermöglicht, dass die entsprechenden Bereiche, beispielsweise durch eine teilweise Harzverfüllung, abgedichtet werden.

Ausgehend hiervon liegt der Erfindung die Aufgabe zugrunde, die Effizienz und Dauerleistungsfähigkeit einer elektrischen Maschine weiter zu verbessern, wobei vorzugsweise eine einfache Fertigbarkeit der elektrischen Maschine erreicht wird.

Die Aufgabe wird erfindungsgemäß durch einen Stator der eingangs genannten Art gelöst, wobei der Stator ein Statorgehäuse aufweist, das für sich genommen oder gemeinsam mit dem Statorkörper ein von Kühlmittel durchströmbares Kühlvolumen abgesehen von wenigstens einem Kühlmittelzufluss und wenigstens einem Kühlmittelabfluss vollständig umschließt, wobei das Kühlvolumen zumindest die Spulen einschließt, wobei das Statorgehäuse vollständig oder in mehreren Feldführungsbereichen paramagnetisch und/oder ferromagnetisch ist.

Erfindungsgemäß wird vorgeschlagen, ein Kühlvolumen zur Kühlung mehrerer Spulen durch ein Statorgehäuse auszubilden, wobei durch eine paramagnetische und/oder ferromagnetische Ausbildung des ganzen Statorgehäuses oder von mehreren Feldführungsbereichen des Statorgehäuses eine Feldführung bzw. Feldkonzentration im Bereich zwischen dem Rotor und den Statorzähnen erreicht wird. Das Statorgehäuse kann an dem Statorkörper angeordnet sein und/oder eine Ausnehmung zur Aufnahme eines Rotors aufweisen. Rotorseitig, beispielsweise durch Permanentmagnete oder Spulen, erzeugte Magnetfelder können durch eine derartige Ausbildung des Statorgehäuses so geführt werden, dass Streufelder, die sich in eine Axialrichtung des Stators über den Bereich des Stators hinaus erstrecken, unterdrückt werden und/oder dass in Umfangsrichtung des Stators Felder im Bereich der Statorzähne konzentriert werden. Hierdurch können Wirbelstromverluste in den Wicklungen der Spulen und/oder in den den Stator umgebenden Komponenten verringert werden. Dies erhöht die Effizienz einer elektrischen Maschine, die den erfindungsgemäßen Stator nutzt, und verringert Abwärmeverluste, womit geringere Kühlleistungen erforderlich sind und/oder eine Verbesserung der Dauernutzbarkeit der Maschine erreicht wird.

Um eine gute Feldführung durch das Statorgehäuse bzw. die feldführenden Bereiche zu erreichen, kann der Stator bzw. können die Feldführungsbereiche eine magnetische Permeabilität von wenigstens 100 H/m, insbesondere von wenigstens 200 H/m aufweisen. Der Stator bzw. die Feldführungsbereiche können aus einem homogenen Material gebildet sein, das eine entsprechend hohe magnetische Permeabilität aufweist. Es ist jedoch auch möglich, komplexe Materialien zu nutzen, wobei insbesondere mehrere Schichten verschiedener Materialen genutzt werden können, von denen wenigstens eines eine ausreichend hohe magnetische Permeabilität aufweist.

Das oder wenigstens eines der Materialien, aus denen das Statorgehäuse bzw. die Feldführungsbereiche gebildet sind, ist vorzugsweise weichmagnetisch. Es kann ergänzend oder alternativ eine geringe und/oder anisotrope Leitfähigkeit aufweisen. Eine anisotrope Leitfähigkeit kann beispielsweise durch eine Schichtung von Materialien verschiedener Leitfähigkeit im gesamten Statorgehäuse oder in den Feldführungsbereichen erreicht werden. Beispielsweise kann die Leitfähigkeit in die Radialrichtung des Stators um wenigstens den Faktor 10 oder um wenigstens den Faktor 100 größer sein als die Leitfähigkeit in die Umfangsrichtung und/oder in die Axialrichtung des Stators.

Die Axialrichtung, die Radialrichtung und die Umfangsrichtung sind jeweils bezüglich des Statorkörpers definiert. Die Axialrichtung steht senkrecht auf dem ringförmigen Grundkörper und verläuft somit parallel zu einer Rotationsachse einer elektrischen Maschine, die den erfindungsgemäßen Stator nutzt. Die Radialrichtung erstreckt sich in Richtung des Radius des ringförmigen Statorkörpers und die Umfangsrichtung verläuft jeweils in Richtung des Umfangs des ringförmigen Statorkörpers. Diese Richtungen entsprechen den Achsen eines lokalen Koordinatensystem in Zylinderkoordinaten. Die radial von der ringförmigen Grundform abstehenden Statorzähne können somit in die Radialrichtung oder entgegen der Radialrichtung ausgerichtet sein, das heißt entweder zu einer Rotationsachse einer mit dem Stator zu bildenden elektrischen Maschine hin oder von der Rotationsachse weggerichtet sein.

Erfindungsgemäß umschließt das Gehäuse die Spulen und erstreckt sich somit in Axialrichtung über die Statorzähne und insbesondere über den ganzen Stator hinaus. Das Gehäuse umschließt das Kühlvolumen im Wesentlichen kühlmitteldicht, wobei insbesondere ein Eindringen von flüssigem Kühlmittel in den Bereich zwischen Stator und Rotor verhindert wird.

Das Statorgehäuse kann verschiedene Materialien umfassen. Insbesondere kann es ein Trägermaterial umfassen, das ein paramagnetisches und/oder ein ferromagnetisches Material und/oder paramagnetische und/oder ferromagnetische Strukturen aus mehreren Materialien trägt. Das Trägermaterial kann ein Kunststoff, beispielsweise ein Polyesterharz oder ein Epoxidharz, oder ein glas- oder kohlefaserverstärkter Kunststoff sein.

Vorzugsweise ist die Permeabilität und/oder die Magnetfeldstärke, bei der eine Sättigung der Magnetisierung eintritt, für das gesamte Statorgehäuse oder für die Feldführungsbereiche und/oder für Bereiche des Statorgehäuses, die keine Feldführungsbereiche sind, in einem Betriebsbereich der elektrischen Maschine im Wesentlichen temperaturunabhängig. Beispielsweise können sich diese Größen in einem Betriebsbereich von 20 °C bis 100 °C, um weniger als 20 %, weniger als 10 % oder weniger als 5 % ändern.

Das Statorgehäuse oder die Feldführungsbereiche können aus einem geschichteten Blech und/oder aus dem gleichen Material bestehen, aus dem die Statorzähne gebildet sind. Hierbei können die Statorzähne vorzugsweise aus dem gleichen Material gebildet sein wie der ganze Statorkörper. Bei dem Material kann es sich auch um ein komplexes Material handeln, dessen Eigenschaften durch eine Kombination mehrerer Materialien und/oder durch eine Strukturierung eines oder mehrerer Materialen bestimmt werden. Wird geschichtetes Blech verwendet, können die Bleche vorzugsweise aus Elektroblech und/oder Silikon-Stahl bestehen.

Besteht oder bestehen der Stator oder die feldführenden Bereiche aus einem geschichteten Blech, so kann das geschichtete Blech aus mehreren Blechlagen bestehen, die in die Axialrichtung des Stators geschichtet sind, wobei zwischen den Blechlagen jeweils eine elektrisch isolierende Schicht angeordnet ist. Die isolierende Schicht kann insbesondere gebildet werden, indem die Blechlagen mit einer isolierenden Schicht beschichtet, beispielsweise lackiert, sind. Alternativ können zwischen die Bleche jeweils isolierende Platten eingebracht sein.

Jedem der Statorzähne kann einer der Feldführungsbereiche zugeordnet sein, dessen Position an dem Statorgehäuse in Umfangsrichtung und in Axialrichtung mit der Position des jeweils zugeordneten Statorzahns übereinstimmt.

Dabei ist es möglich, dass sich jeder der jeweils einem der Statorzähne zugeordneten Feldführungsbereiche in Umfangsrichtung und/oder in Axialrichtung über den zugeordneten Statorzahn hinauserstreckt.

Jeder der Statorzähne kann mechanisch mit dem jeweils zugeordneten Feldführungsbereich in Kontakt stehen. Jeder der Statorzähne kann mit dem jeweils zugeordneten Feldführungsbereich derart verbunden sein, dass eine Verschiebung des Statorgehäuses bezüglich des Statorkörpers in Umfangsrichtung, das heißt eine relative Rotation von Statorkörper und Statorgehäuse, nicht möglich ist. Die Verbindung kann formschlüssig erfolgen, wobei das Statorgehäuse oder eine Komponente des Statorgehäuses bei der Anordnung des Statorgehäuses an dem Statorkörper durch die Verbindung insbesondere in Axialrichtung geführt ist.

Der Statorkörper kann derart ausgebildet sein, dass die Statorzähne keine Zahnköpfe aufweisen. In diesem Fall ist die Ausdehnung der Statorzähne in die Axialrichtung und in die Umfangsrichtung an jedem Punkt in Radialrichtung kleiner als ein Innendurchmesser der Spulen bzw. der Durchmesser der engsten Wicklung der Spulen. In diesem Fall können die Spulen unabhängig von dem Statorkörper gewickelt werden, wonach die gewickelten Spulen jeweils auf den zugeordneten Statorzahn aufsteckbar sind. Durch das Vorsehen von Feldführungsbereichen, die mit den Statorzähnen in Kontakt stehen, können die Vorteile von Zahnköpfen, insbesondere eine Abschirmung der Wicklungen gegen rotorseitige Magnetfelder und eine Führung der Magnetfelder, dennoch erreicht werden.

Der Statorkörper kann zwischen jeweils zwei der Feldführungsbereiche je einen Verbindungsbereich aufweisen, der die beiden Feldführungsbereiche trennt, wobei die magnetische Permeabilität des Verbindungsbereichs niedriger ist als die magnetische Permeabilität der Feldführungsbereiche und/oder wobei die Magnetisierung des Verbindungsbereichs bei geringeren magnetischen Feldstärken sättigt, als die Magnetisierung der Feldführungsbereiche. Die Feldführungsbereiche und die Verbindungsbereiche können abwechselnd in Umfangsrichtung angeordnet sein. Die Nutzung von Verbindungsbereichen reduziert die magnetische Kopplung zwischen verschiedenen Statorzähnen, womit ein magnetisches "Kurzschließen" von an verschiedenen Statorzähnen angeordneten Spulen verhindert werden kann.

Es ist möglich, dass die Verbindungsbereiche aus einem Material gebildet sind, das sich von dem Material der Feldführungsbereiche unterscheidet. Alternativ ist es möglich, dass sowohl die Feldführungsbereiche als auch die Verbindungsbereiche aus dem gleichen Material bestehen, wobei die Dicke des Materials in die Radialrichtung des Stators in den Verbindungsbereichen geringer ist als in den Feldführungsbereichen. Durch eine Reduzierung der Ausdehnung können die magnetischen Eigenschaften von Materialien geändert werden. Es ist möglich, dass sowohl die Feldführungsbereiche als auch die Verbindungsbereiche aus einem geblechten Material bestehen, das insbesondere in Axialrichtung des Stators geschichtet ist. Werden die Verbindungsbereiche im Vergleich zu den Feldführungsbereichen in Radialrichtung dünner ausgebildet, so führen die geringere Ausdehnung sowie die beim Stanzen der Bleche erzeugten Strukturfehler dazu, dass die Permeabilität und/oder die Sättigungsmagnetisierung in den Verbindungsbereichen reduziert wird.

Das Statorgehäuse oder die Feldführungsbereiche kann oder können zumindest abschnittsweise elektrisch leitfähig sein und elektrisch leitend mit dem Statorkörper verbunden sein. Bei der elektrischen Leitfähigkeit kann es sich um eine anisotrope Leitfähigkeit handeln. Hierbei kann die Leitfähigkeit in eine Richtung, beispielsweise in die Axialrichtung oder in die Umfangsrichtung des Stators, um wenigstens eine, vorzugsweise um mehrere Größenordnungen schlechter sein als die Leitfähigkeit in eine andere der Richtungen. Eine anisotrope Leitfähigkeit kann durch Nutzung eines anisotropen Materials, beispielsweise eines geblechten Materials, erreicht werden. Unter einer abschnittsweisen Leitfähigkeit ist hierbei zu verstehen, dass komplexe, beispielsweise geschichtete, Materialien genutzt werden, die sowohl leitfähige als auch nicht leitfähige Materialien umfassen. Ein leitfähiges Material sollte einen spezifischen Widerstand von weniger als 1 Ωm, insbesondere von weniger als 1 x 10⁻⁴ Ωm aufweisen. Insbesondere kann der Widerstand zwischen zwei beliebigen Punkten des Statorgehäuses bzw. eines der feldführenden Bereiche maximal 1 kΩ, maximal 10 Ω oder maximal 1 Ω sein. Durch das Vorsehen eines leitfähigen Statorgehäuses bzw. eines Statorgehäuses, das leitfähige feldführende Bereiche aufweist, kann eine kapazitive Kopplung zwischen dem Rotor und dem Stator sowie insbesondere den Spulen reduziert werden. Hierdurch kann eine Induktion von Strömen auf dem Rotor reduziert werden, womit Rotor- bzw. Wellenströme verringert werden können. Durch diese Maßnahme wird die elektromagnetische Verträglichkeit einer elektrischen Maschine, die den erfindungsgemäßen Stator nutzt, verbessert.

Das Statorgehäuse kann eine erste Gehäusekomponente, die in Axialrichtung des Stators in das Statorgehäuse eingeschoben ist oder in die das Statorgehäuse in Axialrichtung des Stators eingeschoben ist, und wenigstens eine zweite Gehäusekomponente, die sowohl mit der ersten Gehäusekomponente als auch mit dem Statorkörper verbunden ist, umfassen, wobei die erste Gehäusekomponente die Feldführungsbereiche umfasst. Die erste Gehäusekomponente und die zweite Gehäusekomponente dichten das Kühlvolumen gemeinsam ab. Insbesondere können zwei zweite Gehäusekomponenten vorgesehen sein. Bei der ersten Gehäusekomponente kann es sich um eine ringförmige Gehäusekomponente handeln, die in den Stator eingeschoben ist, oder in die der Stator eingeschoben ist. Die zweiten Gehäusekomponenten können der seitlichen Abdichtung dienen. Die erste und/oder die zweite Gehäusekomponente können einteilig ausgebildet sein. Es ist jedoch auch möglich, dass sie jeweils aus mehreren Ringsegmenten bestehen.

Die Spulen können separat von dem Statorkörper vorgefertigte Spulen sein, die auf die Statorzähne aufgeschoben sind. Hierbei kann jeweils eine Spule auf jeden Statorzahn aufgeschoben sein, es können jedoch auch mehrere Spulen auf einen der Statorzähne aufgeschoben sein oder eine Spule kann auf mehrere Statorzähne aufgeschoben sein. Die Spulen können jeweils auf einen Spulenträger aufgewickelt sein, der auf die Statorzähne aufgeschoben ist.

Neben dem erfindungsgemäßen Stator betrifft die Erfindung eine elektrische Maschine mit einem Rotor und einem Stator, wobei als Stator der erfindungsgemäße Stator verwendet wird. Die elektrische Maschine kann ein Elektromotor und/oder ein Generator sein.

Daneben betrifft die Erfindung ein Kraftfahrzeug, das eine erfindungsgemäße elektrische Maschine umfasst. Die erfindungsgemäße elektrische Maschine kann dem Antrieb des Kraftfahrzeugs dienen und insbesondere ein Antriebsmotor oder ein Motor zur Drehmomentverteilung sein.

Die Erfindung betrifft zudem ein Verfahren zur Herstellung eines Stators für eine elektrische Maschine, umfassend die Schritte:
- Bereitstellen eines Statorkörpers mit mehreren radial von der ringförmigen Grundform abstehenden Statorzähnen, die in Umfangsrichtung zwischen jeweils zwei der Statorzähne eine Aufnahme für Wicklungen jeweils wenigstens einer Spule ausbilden,
- Aufbringen von mehreren Spulen, deren Wicklungen jeweils wenigstens einen der Statorzähne umlaufen, auf den Statorkörper,
- Bereitstellen eines Statorgehäuses oder mehrerer Gehäusekomponenten, die gemeinsam das Statorgehäuse bilden, wobei das Statorgehäuse vollständig oder in mehreren Feldführungsbereichen paramagnetisch und/oder ferromagnetisch ist,
- Anordnen des Statorgehäuses oder der Gehäusekomponenten an dem Statorkörper derart, dass das Statorgehäuse für sich genommen oder gemeinsam mit dem Statorkörper ein von Kühlmittel durchströmbares Kühlmittelvolumen, das zumindest die Spulen einschließt, abgesehen von wenigstens einem Kühlmittelzufluss und wenigstens einem Kühlmittelabfluss vollständig umschließt.

Das Statorgehäuse kann derart an dem Statorkörper angeordnet werden, dass zunächst eine erste der Gehäusekomponenten in Axialrichtung des Stators in das Statorgehäuse eingeschoben wird oder das Statorgehäuse in Axialrichtung des Stators in die erste Gehäusekomponente eingeschoben wird, wonach auf einer Stirnseite oder beiden Stirnseiten des Stators jeweils eine zweite der Gehäusekomponenten sowohl mit der ersten Gehäusekomponente als auch mit dem Statorkörper verbunden wird, um das Statorgehäuse auszubilden.

Die Spulen können separat von dem Statorkörper hergestellt werden, wonach die Spulen auf die Statorzähne aufgeschoben werden.

Weitere Vorteile und Einzelheiten der Erfindung ergeben sich aus den folgenden Ausführungsbeispielen und den zugehörigen Zeichnungen. Dabei zeigen schematisch:
- Fig. 1: ein Ausführungsbeispiel einer erfindungsgemäßen elektrischen Maschine,
- Fig. 2: eine Detailansicht eines Ausführungsbeispiels eines erfindungsgemäßen Stators,
- Fig. 3: einen Schnitt entlang der Linie III-III in Fig. 2,
- Fig. 4: eine Detailansicht eines Statorgehäuses eines weiteren Ausführungsbeispiels eines erfindungsgemäßen Stators, und
- Fig. 5: ein Ausführungsbeispiel eines erfindungsgemäßen Verfahrens.

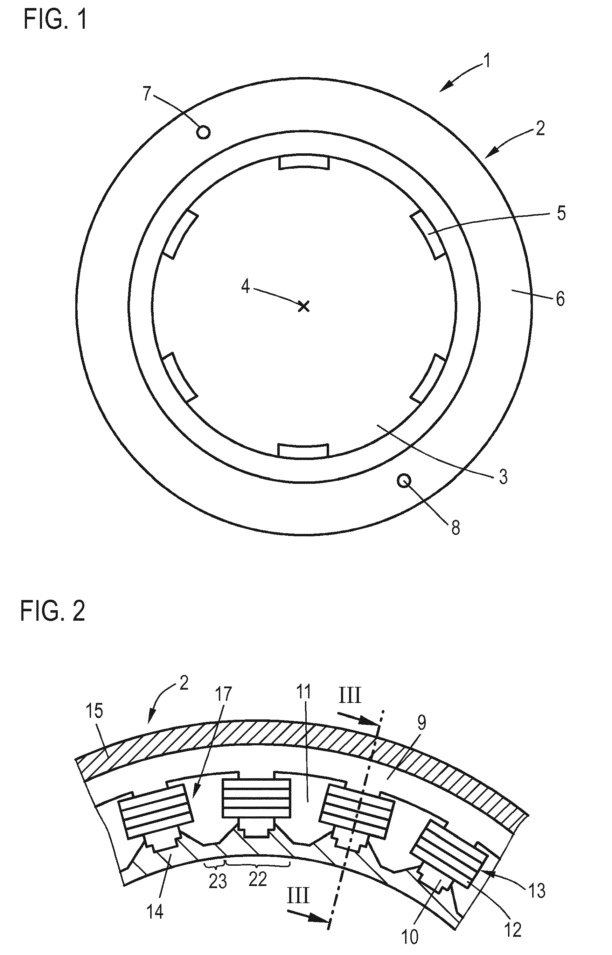

Fig. 1 zeigt ein Ausführungsbeispiel einer elektrischen Maschine 1, die einen Stator 2 und einen Rotor 3 umfasst, wobei der Rotor 3 um eine Rotationsachse 4 bezüglich des Stators 2 rotierbar ist. An dem Rotor 5 sind mehrere Permanentmagneten angeordnet, die mit den in Fig. 1 nicht gezeigten Spulen des Stators 2 wechselwirken. In der in Fig. 1 gezeigten Draufsicht auf die elektrische Maschine 1 ist als Komponente des Stators 2 ausschließlich das Statorgehäuse 6 dargestellt, das ein Kühlvolumen, in dem die Spulen des Stators 2 angeordnet sind, abgesehen von einem Kühlmittelzufluss 7 und einem Kühlmittelabfluss 8 vollständig einschließt. Da die elektrische Maschine 1 ein Innenläufer ist, weist das Statorgehäuse 6 eine Ausnahme zur Aufnahme des Rotors 3 auf. Durch die Nutzung des Gehäuses 6 ist einerseits eine effiziente Kühlung der Spulen durch ein, insbesondere flüssiges, Kühlmittel möglich, andererseits kann die Effizienz der elektrischen Maschine 1 weiter verbessert werden, da Verluste aufgrund von Wirbelströmen reduziert werden können. Durch eine Verringerung der kapazitiven Kopplung zwischen den Spulen und dem Rotor 3 kann zudem eine Induktion von Wechselspannungen an dem Rotor 3 verringert werden, wodurch die elektromagnetische Verträglichkeit der elektrischen Maschine 1 verbessert wird.

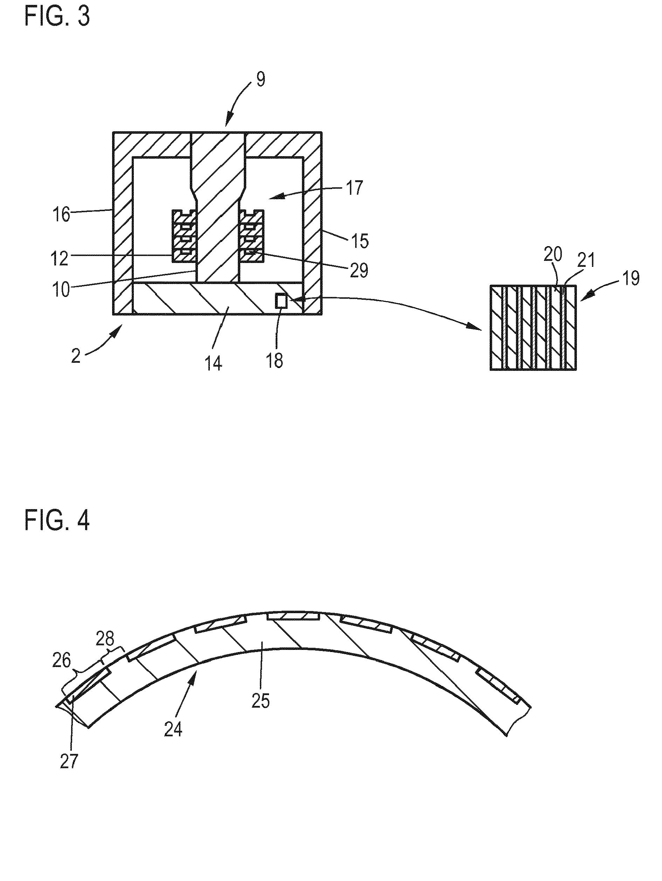

Der interne Aufbau des Stators 2 ist in Fig. 2 und 3 dargestellt, wobei Fig. 2 eine Detailansicht eines Schnitts in der Ebene des Statorkörpers 9 und Fig. 3 einen Schnitt in der in Fig. 2 mit III-III bezeichneten Schnittebene zeigt. Der Stator 2 umfasst den Statorkörper 9 mit mehreren radial von der ringförmigen Grundform abstehenden Statorzähnen 10. Zwischen jeweils zwei der Statorzähne 10 wird in Umfangsrichtung eine Aufnahme 11 für die Wicklungen 12 von Spulen 13 ausgebildet. Der Stator 2 umfasst mehrere dieser Spulen 13, deren Wicklungen 12 jeweils einen der Statorzähne 10 umlaufen.

Der Stator 2 umfasst zudem das Statorgehäuse 6, das aus einer ersten Gehäusekomponente 14 und zwei zweiten Gehäusekomponenten 15, 16 gebildet ist. Das Statorgehäuse 6 schließt ein Kühlvolumen 17, das die Spulen 13 umfasst, abgesehen von dem Kühlmittelzufluss 7 und dem Kühlmittelabfluss 8 vollständig ein. In den Wicklungen 12 sind Ausnehmungen 29 vorgesehen, die von einem im Kühlvolumen 17 geführten Kühlmittel durchströmbar sind.

Der Bereich 18 der ersten Gehäusekomponente 14 ist zusätzlich vergrößert dargestellt, wobei in der vergrößerten Darstellung zu erkennen ist, dass das Statorgehäuse 6 aus einem geschichteten Blech 19 gebildet ist, das mehrere Blechlagen 20 und dazwischenliegende isolierende Schichten 21 umfasst. Die isolierenden Schichten 21 können beispielsweise ausgebildet werden, indem die einzelnen Blechlagen 20 vor dem Schichten mit einem isolierenden Lack versehen werden. Dies erfolgt vorzugsweise vor einem Stanzen der Bleche, so dass die Stirnseiten der Blechlagen 20 keinen isolierenden Lack aufweisen. Die Blechlagen 20 sind in Axialrichtung des Stators 2 geschichtet. Durch die Nutzung von geschichtetem Blech wird erreicht, dass das Material des Statorgehäuses 6 eine hohe magnetische Permeabilität aufweist und in Radial- und Umfangsrichtung gut leitfähig ist. Daher sind einerseits die Spulen 13 gegenüber dem magnetischen Feld der Magneten 5 abgeschirmt, was zu einer Reduzierung von Wirbelströmen und somit von Verlusten führt. Andererseits wird die kapazitive Kopplung zwischen dem Rotor 3 und den Spulen 13 verringert, wodurch eine Induktion von Wechselströmen am Rotor reduziert und somit die elektromagnetische Verträglichkeit der elektrischen Maschine 1 verbessert wird. Die Schichtung der Blechlagen 20 mit den dazwischenliegenden isolierenden Schichten 21 in Axialrichtung reduziert jedoch zugleich die Induktion von Wirbelströmen im Statorgehäuse 6, womit zusätzliche Verluste und eine zusätzliche Wärmeentwicklung vermieden werden.

Jedem der Statorzähne 10 ist ein Feldführungsbereich 22 zugeordnet, der in Kontakt mit dem jeweils zugeordneten Statorzahn 10 steht. Zwischen den Feldführungsbereichen 22 sind Verbindungsbereiche 23 angeordnet, die die Feldführungsbereiche 22 trennen. Die Feldführungsbereiche 22 und die Verbindungsbereiche 23 bestehen zwar aus dem gleichen Material, nämlich aus dem geschichteten Blech 19, dieses weist in den Verbindungsbereichen 23 in Radialrichtung des Stators 2 jedoch eine geringere Dicke auf als in den Feldführungsbereichen 22. Da die einzelnen Blechlagen 20 in den Verbindungsbereichen 23 in Radialrichtung eine geringe Ausdehnung aufweisen und im Bereich der Kanten der Blechlagen 20 die magnetischen Eigenschaften der Blechlagen 20 aufgrund von Strukturfehlern, die beim Stanzen der Blechlagen 20 auftreten, stark verändert sind, weisen die Verbindungsbereiche 23 eine geringere Sättigungsmagnetisierung und Permeabilität auf als die Feldführungsbereiche 22. Insbesondere aufgrund der niedrigen Sättigungsmagnetisierung in den Verbindungsbereichen 23 ist die magnetische Kopplung verschiedener Statorzähne 10 über die Verbindungsbereiche 23 vernachlässigbar klein, womit der Wirkungsgrad der elektrischen Maschine 1 durch diese Verbindungsbereiche 23 nur unwesentlich verringert wird. Gleichzeitig erlaubt die Ausbildung der Feldführungsbereiche 22 und der Verbindungsbereiche 23 aus dem gleichen Material eine besonders einfache Herstellung des Statorgehäuses 6.

Die kapazitive Entkopplung der Spulen 13 vom Rotor 3 kann weiter verbessert werden, wenn eine leitfähige Verbindung des Statorgehäuses 6, insbesondere der Feldführungsbereiche 22, mit einem definierten Potential und/oder mit dem Statorkörper erfolgt. Dies kann ermöglicht werden, indem am Statorgehäuse 6 an der dem Rotor 3 zugewandten Seite und/oder an der gegenüberliegenden Seite, an der das Statorgehäuse in Fig. 3 mit dem Statorkörper 9 verbunden ist, an einer oder mehreren umfangsseitigen Positionen eine elektrisch leitende Querverbindung geschaffen wird, um die einzelnen Blechlagen zu verbinden. Dies ermöglicht einen Potentialausgleich zwischen den Blechlagen. Eine Verbindung mit einem definierten Potential kann dann an einem oder mehreren beliebigen Punkten des Statorkörpers 9 oder des Statorgehäuses 6 erfolgen. In vielen Fällen kann jedoch auch auf eine Verbindung der einzelnen Blechlagen 20 verzichtet werden, da aufgrund der relativ hohen Ladungsträgerdichte in den Blechlagen 20 bereits eine ausreichende kapazitive Entkopplung zwischen den Spulen 13 und dem Rotor 3 erreicht wird.

Fig. 4 zeigt eine Detailansicht eines Statorgehäuses 24 eines weiteren Ausführungsbeispiels eines Stators für eine elektrische Maschine. Das Statorgehäuse 24 besteht zum großen Teil aus einem Trägermaterial 25, beispielsweise einem glasfaserverstärkten Kunststoff. Das Trägermaterial 25 kann diamagnetisch sein. In Umfangsrichtung des Statorgehäuses 24 sind mehrere Feldführungsbereiche 26 angeordnet, in denen das Statorgehäuse 24 aus einem paramagnetischen oder ferromagnetischen Material 27 besteht. Bei dem Material 27 kann es sich beispielsweise um geschichtetes Blech handeln. Die zwischen den Feldführungsbereichen 26 liegenden Verbindungsbereiche 28 sind aus dem Trägermaterial 25 gebildet und können daher diamagnetisch sein. Durch die Nutzung zweier unterschiedlicher Materialien in den feldführenden Bereichen 26 und in den Zwischenbereichen 28 kann in einigen Fällen die magnetische Kopplung zwischen den Statorzähnen 10 weiter verringert werden, womit eine weitere Steigerung der Effizienz der elektrischen Maschine 1 möglich sein kann.

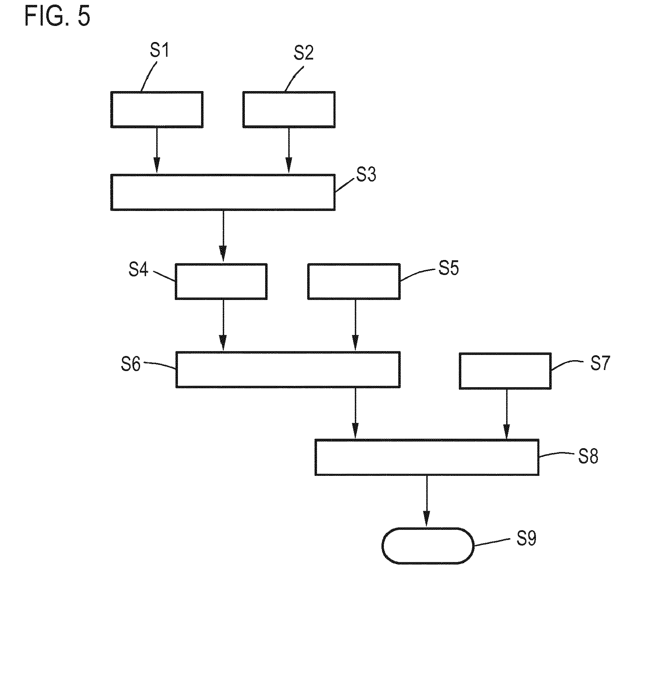

Fig. 5 zeigt ein Ausführungsbeispiel eines Verfahrens zur Herstellung eines Stators für eine elektrische Maschine. In Schritt S1 wird ein Statorkörper mit mehreren radial von einer ringförmigen Grundform abstehenden Statorzähnen, die in Umfangsrichtung zwischen jeweils zwei der Statorzähne eine Aufnahme für Wicklungen jeweils wenigstens einer Spule ausbilden, bereitgestellt. Verfahren zur Bereitstellung entsprechender Statorkörper sind im Stand der Technik bekannt und sollen daher nicht detailliert beschrieben werden.

Im Schritt S2 werden mehrere Spulen bereitgestellt, indem die Wicklungen der Spulen auf jeweils einen Spulengrundkörper aufgebracht werden. In Schritt S3 werden die vorgefertigten Spulen auf die Statorzähne des bereitgestellten Statorkörpers gesteckt und in Schritt S4 erfolgt eine elektrische Kontaktierung der Spulen.

In Schritt S5 wird eine erste Gehäusekomponente eines Statorgehäuses bereitgestellt, an der für jeden der Statorzähne ein feldführender Bereich aus einem paramagnetischen oder ferromagnetischen Material angeordnet ist. Die Gehäusekomponente kann beispielsweise ausgebildet sein, wie die in Fig. 2 und 3 gezeigte erste Gehäusekomponente 14. Ist sie aus geschichtetem Blech gefertigt, so kann sie entsprechend dem Statorkörper hergestellt werden, so dass sie sich von diesem ausschließlich bezüglich ihrer Formgebung unterscheidet.

In Schritt S6 wird der Statorkörper axial in die erste Gehäusekomponente eingeführt, wobei die relative Ausrichtung des Statorgehäuses und der ersten Gehäusekomponente so gewählt ist, dass jeweils einer der Feldführungsbereiche einen der Statorzähne kontaktiert.

In Schritt S7 werden zwei zweite Gehäusekomponenten bereitgestellt, die in Schritt S8 jeweils auf einer Stirnseite des Stators angeordnet und mit dem Statorkörper und der ersten Gehäusekomponente verbunden werden, um das Statorgehäuse auszubilden. Die zweiten Gehäusekomponenten können entsprechend der in Fig. 3 gezeigten zweiten Gehäusekomponenten 15, 16 ausgebildet sein. Die Verbindung kann beispielsweise durch Kleben, Schweißen oder Verschrauben hergestellt werden.

In Schritt S9 ist die Herstellung des Stators abgeschlossen und es kann ein Rotor in dem hergestellten Stator angeordnet werden und der Stator kann mit einem Kühlkreislauf und mit einer elektrischen Schaltung zur Steuerung der Spulen verbunden werden.

Die zu den Fig. 1 bis 5 erläuterten Ausführungsbeispiele beziehen sich alle auf Innenläufer, das heißt auf elektrische Maschinen, bei denen der Rotor innerhalb des Stators angeordnet ist. Selbstverständlich ist es auch möglich, die gezeigten Merkmale bei einem Außenläufer zu nutzen, bei dem ein Rotor um einen Stator rotiert.

## Patentansprüche

1. Stator für eine elektrische Maschine (1), umfassend
• einen ringförmigen Statorkörper (9) mit mehreren radial von einer ringförmigen Grundform abstehenden Statorzähnen (10), die in Umfangsrichtung zwischen jeweils zwei der Statorzähne (10) eine Aufnahme für Wicklungen (12) jeweils wenigstens einer Spule (13) ausbilden, und
• mehrere Spulen (13), deren Wicklungen (12) jeweils wenigstens einen der Statorzähne (19) umlaufen,
**dadurch gekennzeichnet,**
**dass** der Stator (2) ein Statorgehäuse (6) aufweist, das für sich genommen oder gemeinsam mit dem Statorkörper (9) ein von Kühlmittel durchströmbares Kühlvolumen (17) abgesehen von wenigstens einem Kühlmittelzufluss (7) und wenigstens einem Kühlmittelabfluss (8) vollständig umschließt, wobei das Kühlvolumen (17) zumindest die Spulen (13) einschließt, wobei das Statorgehäuse (6, 24) vollständig oder in mehreren Feldführungsbereichen (22, 26) paramagnetisch und/oder ferromagnetisch ist.

2. Stator nach Anspruch 1,
**dadurch gekennzeichnet,**
**dass** das Statorgehäuse (6, 24) oder die Feldführungsbereiche (22, 26) aus einem geschichteten Blech (19) und/oder aus dem gleichen Material bestehen, aus dem die Statorzähne (19) gebildet sind.

3. Stator nach Anspruch 2,
**dadurch gekennzeichnet,**
**dass** das geschichtete Blech (19) aus mehreren Blechlagen (20) besteht, die in die Axialrichtung des Stators (2) geschichtet sind, wobei zwischen den Blechlagen (20) jeweils eine elektrisch isolierende Schicht (21) angeordnet ist.

4. Stator nach einem der vorangehenden Ansprüche,
**dadurch gekennzeichnet,**
**dass** jedem der Statorzähne (10) einer der Feldführungsbereiche (22, 26) zugeordnet ist, dessen Position an dem Statorgehäuse (6) in Umfangsrichtung und in Axialrichtung mit der Position des jeweils zugeordneten Statorzahns (10) übereinstimmt.

5. Stator nach Anspruch 4,
**dadurch gekennzeichnet,**
**dass** sich jeder der jeweils einem der Statorzähne (10) zugeordneten Feldführungsbereiche (22, 26) jeweils in Umfangsrichtung und/oder in Axialrichtung über den zugeordneten Statorzahn (10) hinaus erstreckt.

6. Stator nach einem der Ansprüche 4 oder 5,
**dadurch gekennzeichnet,**
**dass** jeder der Statorzähne (10) mechanisch mit dem jeweils zugeordneten Feldführungsbereich (22, 26) in Kontakt steht.

7. Stator nach einem der vorangehenden Ansprüche,
**dadurch gekennzeichnet,**
**dass** das Statorgehäuse (6, 24) zwischen jeweils zwei der Feldführungsbereiche (22, 26) je einen Verbindungsbereich (23, 28) aufweist, der die beiden Feldführungsbereiche (22, 26) trennt, wobei die magnetische Permeabilität des Verbindungsbereichs (23, 28) niedriger ist als die magnetische Permeabilität der Feldführungsbereiche (22, 26) und/oder wobei die Magnetisierung des Verbindungsbereichs (23, 28) bei geringeren magnetischen Feldstärken sättigt, als die Magnetisierung der Feldführungsbereiche (22, 26).

8. Stator nach Anspruch 7,
**dadurch gekennzeichnet,**
**dass** die Verbindungsbereiche (23, 28) aus einem Material (25) gebildet sind, das sich von dem Material (27) der Feldführungsbereiche (22, 26) unterscheidet.

9. Stator nach Anspruch 7,
**dadurch gekennzeichnet,**
**dass** sowohl die Feldführungsbereiche (22, 26) als auch die Verbindungsbereiche (23, 28) aus dem gleichen Material bestehen, wobei die Dicke des Materials in die Radialrichtung des Stators (2) in den Verbindungsbereichen (23, 28) geringer ist als in den Feldführungsbereichen (22, 26).

10. Stator nach einem der vorangehenden Ansprüche,
**dadurch gekennzeichnet,**
**dass** das Statorgehäuse (6, 24) oder die Feldführungsbereiche (22, 26) zumindest Abschnittsweise elektrisch leitfähig ist oder sind und elektrisch leitend mit dem Statorkörper (9) verbunden ist oder sind.

11. Stator nach einem der vorangehenden Ansprüche,
**dadurch gekennzeichnet,**
**dass** das Statorgehäuse (6, 24) eine erste Gehäusekomponente (14), die in Axialrichtung des Stators (2) in den Statorkörper (9) eingeschoben ist oder in die der Statorkörper (9) in Axialrichtung des Stators eingeschoben ist, und wenigstens eine zweite Gehäusekomponente (15, 16), die sowohl mit der ersten Gehäusekomponente (14) als auch mit dem Statorkörper (9) verbunden ist, umfasst, wobei die erste Gehäusekomponente (14) die Feldführungsbereiche (22, 26) umfasst.

12. Stator nach einem der vorangehenden Ansprüche,
**dadurch gekennzeichnet,**
**dass** die Spulen (13) separat von dem Statorkörper (9) vorgefertigte Spulen (13) sind, die auf die Statorzähne (10) aufgeschoben sind.

13. Elektrische Maschine mit einem Rotor und einem Stator,
**dadurch gekennzeichnet,**
**dass** als Stator ein Stator (2) gemäß einem der vorangehenden Ansprüche verwendet wird.

14. Kraftfahrzeug,
**dadurch gekennzeichnet,**
**dass** es eine elektrische Maschine (1) gemäß Anspruch 13 umfasst.

15. Verfahren zur Herstellung eines Stators (2) für eine elektrische Maschine (1), umfassend die Schritte:
• Bereitstellen eines Statorkörpers (9) mit mehreren radial von der ringförmigen Grundform abstehenden Statorzähnen (10), die in Umfangsrichtung zwischen jeweils zwei der Statorzähne (10) eine Aufnahme (11) für Wicklungen (12) jeweils wenigstens einer Spule (13) ausbilden,
• Aufbringen von mehreren Spulen (13), deren Wicklungen (12) jeweils wenigstens einen der Statorzähne (10) umlaufen, auf den Statorkörper (9),
• Bereitstellen eines Statorgehäuses (6, 24) oder mehrerer Gehäusekomponenten (14, 15, 16), die gemeinsam das Statorgehäuse (6, 24) bilden, wobei das Statorgehäuse (6) vollständig oder in mehreren Feldführungsbereichen (22, 26) paramagnetisch und/oder ferromagnetisch ist,
• Anordnen des Statorgehäuses (6, 24) oder der Gehäusekomponenten (14, 15, 16) an dem Statorkörper (9) derart, dass das Statorgehäuse (6, 24) für sich genommen oder gemeinsam mit dem Statorkörper (9) ein von Kühlmittel durchströmbares Kühlvolumen (17), das zumindest die Spulen (13) einschließt, abgesehen von wenigstens einem Kühlmittelzufluss (7) und wenigstens einem Kühlmittelabfluss (8) vollständig umschließt.

16. Verfahren nach Anspruch 15,
**dadurch gekennzeichnet,**
**dass** das Statorgehäuse (6, 24) derart an dem Statorkörper (9) angeordnet wird, dass zunächst eine erste der Gehäusekomponenten (14) in Axialrichtung des Stators (2) in den Statorkörper (9) eingeschoben wird oder dass zunächst der Statorkörper (9) in Axialrichtung des Stators (2) in die ersten Gehäusekomponente (14) eingeschoben wird, wonach auf einer Stirnseite oder beiden Stirnseiten des Stators (2) jeweils eine zweite der Gehäusekomponenten (15, 16) sowohl mit der ersten Gehäusekomponente (14) als auch mit dem Statorkörper (9) verbunden wird, um das Statorgehäuse (6, 24) auszubilden.

17. Verfahren nach Anspruch 15 oder 16,
**dadurch gekennzeichnet,**
**dass** die Spulen (13) separat von dem Statorkörper (9) hergestellt werden, wonach die vorgefertigten Spulen (13) auf die Statorzähne (10) aufgeschoben werden.
